# EUROPEAN PATENT APPLICATION

(11) **EP 4 803 950 A1**
(43) Date of publication of application: **09.09.2026**
(21) Application number: 26160704.8
(22) Date of filing: 25.02.2026
(51) Int. Cl.: G02B 26/12, B41J 2/47, G03G 15/04

(54) **OPTICAL SCANNING DEVICE AND IMAGE FORMING APPARATUS INCORPORATING THE SAME**

(30) Priority: 05.03.2025 JP 2025034180
(71) Applicant: KYOCERA Document Solutions Inc., Osaka-shi, Osaka 540-8585 (JP)
(72) Inventor: Hozono, Tomohide, Osaka 540-8585 (JP)
(74) Representative: BRP Renaud & Partner mbB Rechtsanwälte Patentanwälte Steuerberater

(57) **Abstract**

An optical scanning device (5) includes first and second light source portions (55a, 55c and 55b, 55d) that emit first and second light beams (D1, D3 and D2, D4), and a scanning optical system including a polygon mirror (51), a scanning lens (56a, 56b, 57a, 57b), a plurality of turn-back mirrors (58a to 61a, 58b to 61b). The turn-back mirrors (58a to 61a, 58b to 61b) include a first mirror (58a, 58b) that reflects the first and second light beams (D1, D3 and D2, D4) having passed through the scanning lens (56a, 56b, 57a, 57b), a second mirror (59a, 59b) that directs the first light beam (D1, D3) reflected by the first mirror (58a, 58b) to an image carrying member (1a, 1c), and third and fourth mirrors (60a, 60b and 61a, 61b) that direct the second light beam (D2, D4) reflected by the first mirror (58a, 58b) to an image carrying member (lb, 1d). The second and third mirrors (59a, 59b and 60a, 60b) are disposed, as seen from the main scanning direction, closer to the polygon mirror (51) than the first mirror (58a, 58b), and the fourth mirror (61a, 61b) is disposed, as seen from the main scanning direction, farther from the polygon mirror (51) than the first mirror (58a, 58b).

## Description

### BACKGROUND

The present disclosure relates to an optical scanning device that is incorporated in an image forming apparatus employing an electrophotographic method, such as a copier, a printer, a facsimile machine, and a multifunction peripheral having the functions of all of them, and that forms an electrostatic latent image by shining light to an image carrying member. The present disclosure also relates to an image forming apparatus incorporating such an optical scanning device.

In an optical scanning device employed in a conventional image forming apparatus, a light beam emitted from a light source such as a laser diode passes through a collimator lens, a cylindrical lens, and an aperture to strike a deflector such as a polygon mirror to be deflected by it, and then passes through a scanning lens to be directed to a photosensitive drum (image carrying member) to shine to scan the surface of the photosensitive drum to form an electrostatic latent image.

In case where the layout of the image forming apparatus prevents the light beam having passed through the scanning lens from being directly directed to the photosensitive drum, a turn-back mirror is typically used to reflect the light beam.

An optical scanning device incorporated in a color image forming apparatus is required to direct a plurality of light beams to photosensitive drums corresponding to a plurality of colors. Inconveniently, this leads to an increased number of turn-back mirrors and thus to an increased size and cost of the optical scanning device.

### SUMMARY

An object of the present disclosure is to provide an optical scanning device that can achieve a reduced number of components and steps involved in assembly combined with a reduced size, and to provide an image forming apparatus incorporating the same.

According to one aspect of the present disclosure, an optical scanning device includes a first light source portion that emits a first light beam, a second light source portion that emits a second light beam, a scanning optical system that directs the first and second light beams to scan corresponding image carrying members, a housing that holds the first and second light source portions and optical components constituting the scanning optical system. The optical scanning device shines light to the surfaces of the image carrying members to form electrostatic latent images through attenuation of electric charge. The scanning optical system includes a polygon mirror that deflects the first and second light beams, one or more scanning lenses that deflect the first and second light beams deflected by the polygon mirror, and a plurality of turn-back mirrors that direct the first and second light beams deflected by the scanning lenses to the surfaces of the image carrying members. The turn-back mirrors include a first mirror that reflects the first and second light beams having passed through the scanning lenses, a second mirror that directs the first light beam reflected by the first mirror to the image carrying member, and a third mirror and a fourth mirror that direct the second light beam reflected by the first mirror to the image carrying members. The second and third mirrors are disposed, as seen from a main scanning direction, closer to the polygon mirror than the first mirror, and the fourth mirror is disposed, as seen from the main scanning direction, farther from the polygon mirror than the first mirror.

### BRIEF DESCRIPTION OF THE DRAWINGS

Fig. 1 is a schematic sectional view of the overall configuration of an image forming apparatus 100 incorporating an optical scanning device 5 according to the present disclosure.
Fig. 2 is a plan view showing the internal structure of the optical scanning device 5 according to one embodiment of the present disclosure.
Fig. 3 is a side sectional view (cross-section along line A-A in Fig. 2) showing the internal structure of the optical scanning device 5 according to the embodiment.
Fig. 4 is a side sectional view (cross-section along line B-B in Fig. 2) showing the internal structure of the optical scanning device 5 according to the embodiment.
Fig. 5 is an enlarged part view showing the optical paths of laser light beams D1 and D2 directed from a polygon mirror 51 to photosensitive drums 1c and 1d via first and second scanning lenses 56a and 57a in Fig. 3.
Fig. 6 is an enlarged part view showing the optical paths of laser light beams D1 and D2 directed from a polygon mirror 51 to photosensitive drums 1c and 1d via first and second scanning lenses 56a and 57a in an optical scanning device 105 of a comparative example.

### DETAILED DESCRIPTION

### [1. Configuration of Image Forming Apparatus]

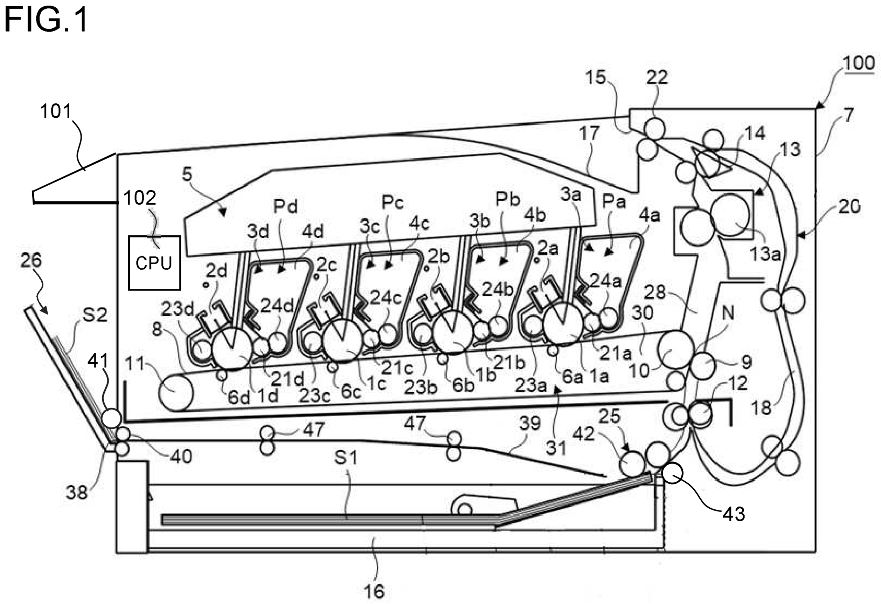

Now, an embodiment of the present disclosure will be described with reference to accompanying drawings. Fig. 1 is a schematic sectional view of the internal structure of an image forming apparatus 100 incorporating an optical scanning device 5 according to the present disclosure. The image forming apparatus 100 in Fig. 1 is a color printer of what is called a tandem type.

Inside an apparatus body 7 of the image forming apparatus 100, image forming portions Pa to Pd are arrayed in a horizontal direction. The image forming portions Pa to Pd sequentially form a yellow, a magenta, a cyan, and a black image each through the processes of electrostatic charging, exposure to light, image development, and image transfer. The image forming portions Pa to Pd are provided so as to correspond to the images of different colors. In the following description, the image forming portion Pa alone will be described; for the image forming portions Pb to Pd, which have basically similar configurations, no separate description will be given.

The image forming portion Pa is provided with a photosensitive drum 1a that carries a visible image (toner image). Above the image forming portion Pa, an optical scanning device 5 is disposed. The optical scanning device 5 emits light beams (laser light) to the surfaces of photosensitive drums 1a to 1d to draw electrostatic latent images. Around the photosensitive drum 1a, along its rotation direction (clockwise in Fig. 1), a charging device 2a, a developing device 3a, and a cleaning device 23a are disposed.

The charging device 2a is disposed opposite the photosensitive drum 1a and can electrostatically charge the surface of the photosensitive drum 1a. The developing device 3a includes a developer container 4a, a development roller 21a, and a feed roller 24a. The developer container 4a is loaded with a predetermined amount of toner. The developer containers 4a to 4d are loaded with yellow, magenta, cyan, and black toner for the developing devices 3a to 3d, respectively. The development roller 21a is disposed opposite the photosensitive drum 1a. The feed roller 24a feeds the toner in the developer container 4a to the outer circumferential surface of the development roller 21a. The development roller 21a can feed the toner fed to the outer circumferential surface to the photosensitive drum 1a.

Below the photosensitive drums 1a to 1d, an intermediate transfer unit 31 is provided. The intermediate transfer unit 31 includes a frame 30, a driving roller 10, a tension roller 11, an intermediate transfer belt 8, and primary transfer rollers 6a to 6d. The driving roller 10 and the tension roller 11 are supported at opposite ends of the frame 30 along its longitudinal direction so as to be rotatable.

The intermediate transfer belt 8 is an endless belt (preferably, a seamless belt without a seam). The intermediate transfer belt 8 is wound around the tension roller 11 and the driving roller 10 so as to be rotatable in the circumferential direction. As the driving roller 10 rotates with a rotational driving force from a belt drive motor (not shown), the rotational driving force is transmitted to the intermediate transfer belt 8 by a frictional force. This rotates the intermediate transfer belt 8 in the same direction as the rotation direction of the driving roller 10. The primary transfer rollers 6a to 6d are supported on the frame 30 so as to be rotatable relative to it at positions where they face the photosensitive drums 1a to 1d across the intermediate transfer belt 8.

A secondary transfer roller 9 is provided so as to face the driving roller 10 across the intermediate transfer belt 8. The secondary transfer roller 9 is kept in pressed contact with the intermediate transfer belt 8 to form a secondary transfer nip N. The secondary transfer roller 9 secondarily transfers the toner image formed on the intermediate transfer belt 8 to a sheet S1 or S2 passing through the secondary transfer nip N.

Inside the image forming apparatus 100, to a side of the image forming portions Pa to Pd and the intermediate transfer belt 8, a sheet conveyance passage 20, a pair of registration rollers 12, a sheet cassette 16, a sheet feeding portion 25, and a manual sheet feeding portion 26 are disposed.

The sheet conveyance passage 20 is configured to include a main conveyance passage 28 and a duplex conveyance passage 18. The main conveyance passage 28 extends along the top-bottom direction. Halfway along the main conveyance passage 28, the pair of registration rollers 12, the secondary transfer roller 9, and a fixing device 13 are disposed. The main conveyance passage 28 conveys the sheet S1 or S2 from the manual sheet feeding portion (described later) 26 or the sheet cassette 16 such that it passes through the pair of registration rollers 12, the secondary transfer nip N, and the fixing device 13 in this order.

The pair of registration rollers 12 aligns the sheet S1 or S2 with the conveyance direction such that the leading edge of the sheet S1 or S2 (a downstream end part of the sheet with respect to the sheet conveyance direction) is orthogonal to the sheet conveyance direction to correct slant conveyance (skew).

At a downstream end part of the main conveyance passage 28 with respect to the sheet conveyance direction, a sheet discharge port 15 that leads outside the image forming apparatus 100 is provided. The sheet discharge port 15 is provided with a pair of discharge rollers 22.

With respect to the sheet conveyance direction, between the pair of discharge rollers 22 and the fixing device 13, a branching portion 14 is provided. The duplex conveyance passage 18 branches off the main conveyance passage 28 at a position where it overlaps with the branching portion 14 of the main conveyance passage 28 with respect to the sheet conveyance direction and rejoins the main conveyance passage 28 at a position on it upstream of the pair of registration rollers 12. The branching portion 14 can sort the sheet S1 or S2 having passed through the fixing device 13 into the sheet discharge port 15 or the duplex conveyance passage 18.

The sheet cassette 16 and the manual sheet feeding portion 26 are provided upstream of the main conveyance passage 28 with respect to the sheet conveyance direction. The sheet cassette 16 can have the sheet S1 stacked on it, and the manual sheet feeding portion 26 can have the sheet S2 stacked on it. The sheet feeding portion 25 is disposed between, at one end, the main conveyance passage 28 and, at the other end, the sheet cassette 16 and the manual sheet feeding portion 26 and feeds the sheet S1 or S2 to the main conveyance passage 28.

The sheet cassette 16 is removably mounted in the apparatus body 7. Specifically, from a state (mounted state) where the sheet cassette 16 is inserted up to the deepest part of a cassette accommodation portion 29 with respect to the horizontal direction, the sheet cassette 16 can be drawn out of the apparatus body 7.

The manual sheet feeding portion 26 is attached to a side of the apparatus body 7, at a position between a carry-in port 38 and the edge of the opening of the cassette accommodation portion 29 with respect to the top-bottom direction. The manual sheet feeding portion 26 can feed the sheet S2 (a sheet as a recording medium such as a sheet with an irregular size, a thick sheet of paper, an envelope, an OHP sheet, and the like) placed on its top face. The carry-in port 38 is provided with a pair of carry-in rollers 40 and a sheet feeding roller 41. As the sheet feeding roller 41 and the pair of carry-in rollers 40 rotate, the sheet S2 is carried into a manual sheet feed passage 39. The sheet S2 carried in the manual sheet feed passage 39 is conveyed by a pair of conveyance rollers 47 toward a pick-up roller 42.

The sheet feeding portion 25 includes the pick-up roller 42 and a pair of sheet feeding rollers 43. The pick-up roller 42 rotates while in contact with the top face of the sheet S1 stacked on a sheet stacking plate 37 in the sheet cassette 16 or the sheet S2 carried into the manual sheet feed passage 39 from the manual sheet feeding portion 26. Thus, the sheet S1 or S2 is fed out in the sheet feeding direction to be passed to the pair of sheet feeding rollers 43.

At the front of the image forming apparatus 100, an operation panel 101 is disposed. The operation panel 101 is an operation portion to receive input for various settings. Inside the image forming apparatus 100, a control portion 102 is disposed. The control portion 102 comprehensively handles the operation of the image forming apparatus 100 and controls the different portions of the image forming apparatus 100.

Next, the procedure for image formation in the image forming apparatus 100 will be described. When a user enters an instruction to start image formation, first, while the photosensitive drums 1a to 1d are rotated, the charging devices 2a to 2d electrostatically charge the surfaces of the photosensitive drums 1a to 1d uniformly. Next, the optical scanning device 5 shines light to the surfaces of the photosensitive drums 1a to 1d to form electrostatic latent images according to image signals on the photosensitive drums 1a to 1d.

Then, the toner in the developer in the developing devices 3a to 3d is fed onto the photosensitive drums 1a to 1d by the development rollers 21a to 21d to electrostatically attach to them. This forms toner images according to the electrostatic latent images on the photosensitive drums 1a to 1d.

In this state, the driving roller 10 is rotated to start rotating the intermediate transfer belt 8 counterclockwise. This primarily transfers the toner images of the different colors formed on the photosensitive drums 1a to 1d to the intermediate transfer belt 8 sequentially. After primary transfer, in preparation for the formation of new electrostatic latent images, the toner and the like left on the photosensitive drums 1a to 1d are removed by the cleaning devices 23a to 23d. In addition, the electric charge left on the photosensitive drums 1a to 1d is eliminated by an electric charge elimination device (not shown).

After that, with predetermined timing, the sheet S1 or S2 is fed from the sheet cassette 16 or the manual sheet feeding portion 26 to the main conveyance passage 28, passes through the pair of registration rollers 12, and is then conveyed to the secondary transfer nip N. Then, the toner images on the intermediate transfer belt 8 are secondarily transferred to the sheet S1 or S2. The sheet S1 or S2 is conveyed to the fixing device 13 and is heated and pressed by a pair of fixing rollers 13a in the fixing device 13 to have the toner images fixed to the surface of the sheet S1 or S2.

When a simplex printing is performed on the sheet S1 or S2, the branching portion 14 sorts the sheet S1 or S2 having passed through the fixing device 13 to the sheet discharge port 15. The sheet S1 or S2 having reached the sheet discharge port 15 is discharged onto a sheet discharge tray 17 by the pair of discharge rollers 22.

When a duplex printing is performed on the sheet S1 or S2, the branching portion 14 sorts the sheet S1 or S2 having passed through the fixing device 13 to the duplex conveyance passage 18. The duplex conveyance passage 18 conveys the sheet S1 or S2, while reversing its front and back sides, to the pair of registration rollers 12 again. Then, the sheet S1 or S2 passes through the secondary transfer nip N and the fixing device 13 again to have the toner images fixed to its back side and is then sorted to the sheet discharge port 15 by the branching portion 14.

### [2. Configuration of Optical Scanning Device]

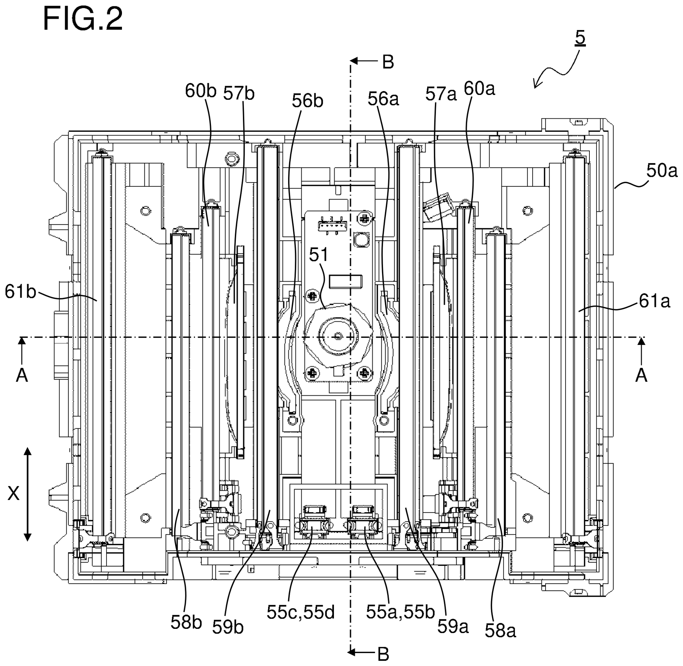

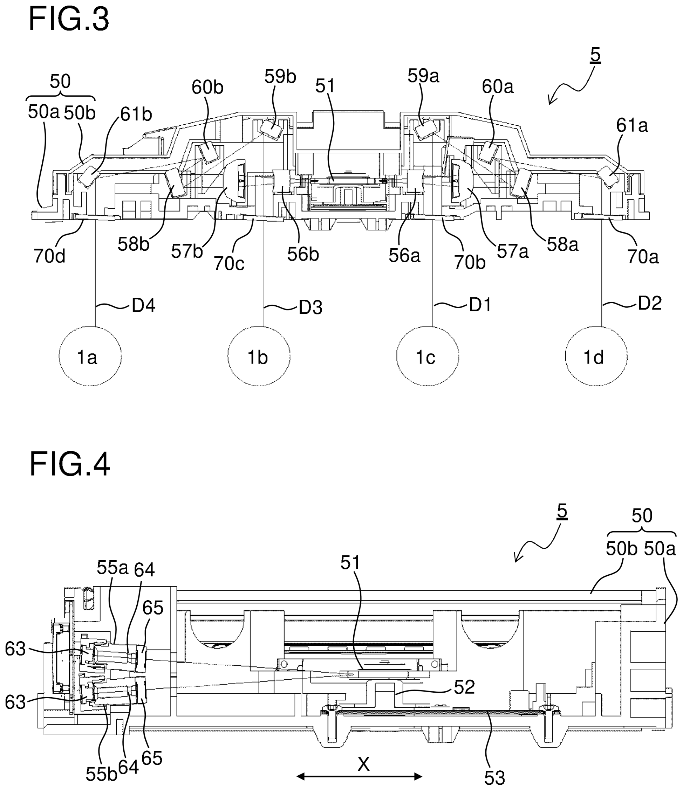

Fig. 2 is a plan view showing the internal structure of the optical scanning device 5 according to one embodiment of the present disclosure. Figs. 3 and 4 are side sectional views showing the internal structure of the optical scanning device 5 according to the embodiment. Fig. 3 is a cross-section along line A-A in Fig. 2, and Fig. 4 is a cross-section along line B-B in Fig. 2. Note that Fig. 2 illustrates the optical scanning device 5 with a lid portion 50b removed to show the inside. Fig. 3 is a view from behind in Fig. 1, and thus the photosensitive drums 1a to 1d are shown reversed left to right as compared with Fig. 1. In addition, the direction indicated by arrow X in Figs. 2 and 4 is defined as the main scanning direction.

As shown in Figs. 2 to 4, the optical scanning device 5 includes a housing 50. The housing 50 has a body portion 50a and a lid portion 50b. In a middle part of the bottom face of the body portion 50a, a polygon mirror 51 is disposed. In the embodiment, the polygon mirror 51 is configured as a rotatable multifaceted mirror in a regular polygonal (hexagon) shape that has a plurality of deflecting faces (reflecting faces) formed on its side faces and that is rotated at a predetermined rotation rate by a polygon motor 52. The polygon motor 52 is fixed to the bottom face of the body portion 50a via a motor supporting plate 53.

In the housing 50, light source units 55a to 55d, first scanning lenses 56a and 56b, second scanning lenses 57a and 57b, first mirrors 58a and 58b, second mirrors 59a and 59b, third mirrors 60a and 60b, and fourth mirrors 61a and 61b are disposed. Note that the light source units 55a and 55b are disposed one above the other, and the same applies to the light source units 55c and 55d.

As shown in Fig. 4, the light source units 55a to 55d each have a laser light source 63, an aperture 64, and a lens unit 65. The lens unit 65 includes a collimator lens and a cylindrical lens (neither is shown).

The light source unit 55a (first light source portion) and the light source unit 55b (second light source portion) are fitted obliquely with respect to the polygon mirror 51. A laser light beam D1 (first light beam) emitted from the light source unit 55a and a laser light beam D2 (second light beam) emitted from the light source unit 55b strike the polygon mirror 51 at the same angle along the top-bottom direction and are reflected by the polygon mirror 51 at the same angle along the top-bottom direction. The same applies to a laser light beam D3 (first light beam) emitted from the light source unit 55c (first light source portion) and a laser light beam D4 (second light beam) emitted from the light source unit 55d (second light source portion).

The first scanning lenses 56a and 56b and the second scanning lenses 57a and 57b have fθ characteristics; they image the laser light beams D1 to D4 reflected and deflected by the polygon mirror 51 on the photosensitive drums 1a to 1d. In the optical paths of the laser light beams D1 to D4 from the polygon mirror 51 to the photosensitive drums 1a to 1d (see Fig. 1), the first mirrors 58a and 58b, the second mirrors 59a and 59b, the third mirrors 60a and 60b, and the fourth mirrors 61a and 61b are disposed. The polygon mirror 51, the first scanning lenses 56a and 56b, the second scanning lenses 57a and 57b, and the first mirrors 58a and 58b to the fourth mirrors 61a and 61b together constitute a scanning optical system that directs the laser light beams D1 to D4 to scan the photosensitive drums 1a to 1d.

As shown in Figs. 2 and 3, the first scanning lenses 56a and 56b, the second scanning lenses 57a and 57b, the first mirrors 58a and 58b, the second mirrors 59a and 59b, the third mirrors 60a and 60b, and the fourth mirrors 61a and 61b are disposed each pair in left-to-right symmetry across the polygon mirror 51. Specifically, when seen from the main scanning direction (from the direction perpendicular to the plane of Fig. 3), starting with the ones closest to the polygon mirror 51, the first scanning lenses 56a and 56b, the second mirrors 59a and 59b, the second scanning lenses 57a and 57b, the third mirrors 60a and 60b, the first mirrors 58a and 58b, the fourth mirrors 61a and 61b are disposed in this order.

In the embodiment, the first and second scanning lenses 56a and 57a are shared by the upper and lower optical paths (optical paths of the laser light beams D1 and D2). The first and second scanning lenses 56b and 57b are shared by the upper and lower optical paths (optical paths of the laser light beams D3 and D4). Thus, the optical paths from the point of reflection on the polygon mirror 51 to the point of incidence on the photosensitive drums 1a to 1d need to have an equal optical path length. This optical path length needs to be a distance that satisfies the fθ characteristics of the first scanning lenses 56a and 56b and the second scanning lenses 57a and 57b.

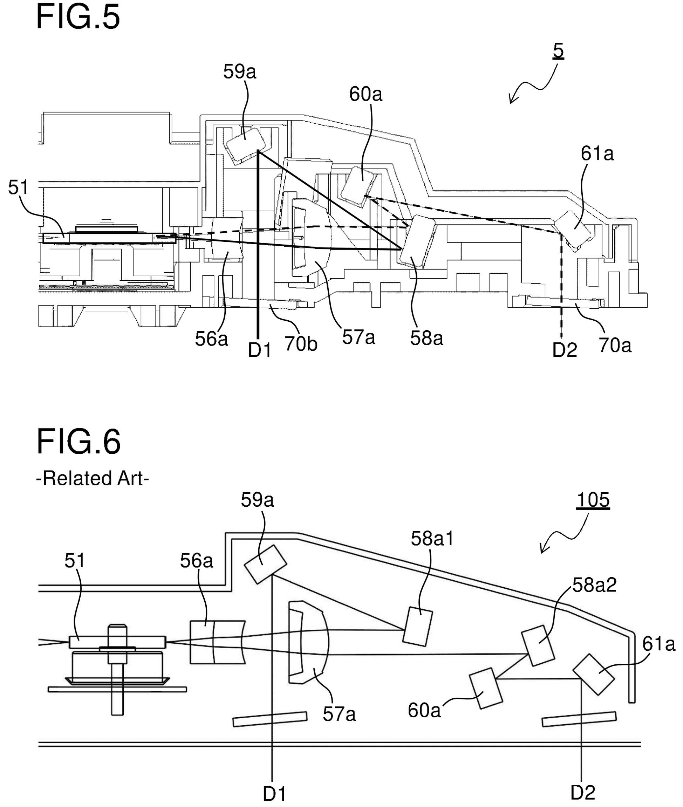

Fig. 5 is an enlarged part view showing the optical paths of the laser light beams D1 and D2 directed from the polygon mirror 51 to the photosensitive drums 1c and 1d via the first and second scanning lenses 56a and 57a in Fig. 3. With reference to Fig. 5, a description will be given of scanning operation with the laser light beams D1 and D2 by the optical scanning device 5 according to the embodiment. In Fig. 5, a solid line indicates the laser light beam D1, and a broken line indicates the laser light beam D2. The scanning operation with the laser light beams D3 and D4 emitted from the laser light source 63 in the light source units 55c and 55d is similar to that with the laser light beams D1 and D2 except that the latter is symmetrical left-to-right to the former.

The laser light beams D1 and D2 emitted from the laser light source 63 (see Fig. 3) in the light source units 55a and 55b are controlled to have a predetermined optical path width by the aperture 64 and are then collimated into substantially parallel light beams by the collimator lens in the lens unit 65. Next, the laser light beams D1 and D2 in the substantially parallel light beams enter the cylindrical lens. The laser light beams D1 and D2 having entered the cylindrical lens exit from it as, on a main scanning section, still substantially parallel light beams but, in the subsidiary scanning direction (top-bottom direction), convergent light beams to be imaged as line images on the deflecting faces of the polygon mirror 51. Here, for easy splitting of the optical paths of the two laser light beams D1 and D2 deflected by the polygon mirror 51, these laser light beams D1 and D2 are so directed as to be incident on the deflecting faces at different angles with respect to them along the subsidiary scanning direction.

The laser light beams D1 and D2 incident on the polygon mirror 51 are deflected at a constant angular velocity by the polygon mirror 51 and are then deflected at a constant velocity by the first scanning lens 56a. The laser light beams D1 and D2 having passed through the first scanning lens 56a enter the second scanning lens 57a and are deflected at a constant velocity by the second scanning lens 57a. Then the laser light beams D1 and D2 deflected at the constant velocity are turned back by the first mirror 58a shared by them. The laser light beams D1 and D2 are so directed as to be incident on the reflecting face of the first mirror 58a at different positions along the subsidiary scanning direction. The width of the first mirror 58a along the subsidiary scanning direction is about 1.5 times greater than that of the second mirror 59a to the fourth mirror 61a. This helps secure a region for reflecting the laser light beams D1 and D2.

The laser light beam D1 turned back by the first mirror 58a is turned back by the second mirror 59a, then passes between the first and second scanning lenses 56a and 57a, and passes through a window portion 70b formed in the bottom face of the body portion 50a to be distributed to the photosensitive drum 1c. The laser light beam D2 turned back by the first mirror 58a is turned back by the third and fourth mirrors 60a and 61a and then passes through a window portion 70a formed in the bottom face of the body portion 50a to be distributed to the photosensitive drum 1d.

As seen from the main scanning direction (direction perpendicular to the plane of Fig. 5), disposing the first mirror 58a farther (right side in Fig. 5) from the polygon mirror 51 than the fourth mirror 61a leads to an increased size of the optical scanning device 5 along the horizontal direction (left-right direction in Fig. 3) and also makes it difficult to secure the optical path of the laser light beam D2 distributed to the photosensitive drum 1d. Thus, preferably, as shown in Fig. 5, as seen from the main scanning direction, the first mirror 58a is disposed closer (left side in Fig. 5) to the polygon mirror 51 than the fourth mirror 61a.

Fig. 6 is an enlarged part view showing the optical paths of the laser light beams D1 and D2 directed from a polygon mirror 51 to photosensitive drums 1c and 1d via first and second scanning lenses 56a and 57a in an optical scanning device 105 of a comparative example. In the optical scanning device 105 in Fig. 6, the laser light beam D1 deflected at a constant angular velocity by the polygon mirror 51 and deflected at a constant velocity by the first and second scanning lenses 56a and 57a is turned back by the first and second mirrors 58a1 and 59a to be distributed to the photosensitive drum 1c.

The laser light beam D2 deflected at a constant angular velocity by the polygon mirror 51 and deflected at a constant velocity by the first and second scanning lenses 56a and 57a is turned back by the first, third and fourth mirrors 58a2, 60a, and 61a and is then distributed to the photosensitive drum 1d.

Instead of the use of the shared first mirror 58a as in Fig. 5, first mirrors 58a1 and 58a2 can be disposed respectively for the optical paths of the laser light beams D1 and D2 as in Fig. 6; this requires a total of five turn-back mirrors in the optical paths of the laser light beams D1 and D2. This also increases the number of fixing members for fixing the mirrors, such as leaf springs. The increased number of turn-back mirrors leads to reduced space for attaching components and hence reduced ease of attaching the turn-back mirrors with the fixing members, making their assembly difficult. Also increased is the number of faces (positions) to attach the mirrors on that require high dimension accuracy, and this makes it more difficult to secure satisfactory dimension accuracy of the housing 50.

In the optical scanning device 5 according to the embodiment, the laser light beams D1 and D2 are reflected by the first mirror 58a shared by them. In addition, the first mirror 58a is disposed closer to the polygon mirror 51 than, of the optical path (outer optical path) of the laser light beam D2, the part incident on the photosensitive drum 1d and farther from the polygon mirror 51 than, of the optical path (inner optical path) of the laser light beam D1, the part incident on the photosensitive drum 1d. In other words, the fourth mirror 61a is disposed, as seen from the main scanning direction, farther from the polygon mirror 51 than the first mirror 58a, and the second and third mirrors 59a and 60a are disposed, as seen from the main scanning direction, closer to the polygon mirror 51 than the first mirror 58a.

This allows the construction of two optical paths of the laser light beams D1 and D2 with a minimum number of components and thus allows a reduction in the number of components and steps involved in assembly, leading to a reduced cost of manufacturing the optical scanning device 5. In addition, this helps reduce, in the horizontal direction, the space in the housing 50 for disposing the turn-back mirrors, contributing to a smaller size of the optical scanning device 5.

The present disclosure is not limited to the above embodiment, and thus any modifications can be made without departing from the spirit of the present disclosure. For example, while the above embodiment deals with a four-beam optical scanning device 5 that includes four light source units 55a to 55d, the present disclosure is not limited to four-beam optical scanning devices; it is applicable equally to two-beam optical scanning devices that include two light source units.

While, the above embodiment takes up a color printer of a tandem type as an example of the image forming apparatus 100 incorporating the optical scanning device 5, the present disclosure can be applied not only in color printers but quite equally in color image forming apparatuses employing an electrophotographic method, such as color copiers and facsimile machines.

The present disclosure finds applications in optical scanning devices that shine light to an image carrying member to form an electrostatic latent image and in image forming apparatuses incorporating the same. With the present disclosure, it is possible to provide an optical scanning device that can achieve a reduced number of components and steps involved in assembly combined with a reduced size, and to provide an image forming apparatus incorporating the same.

The above embodiments of the invention as well as the appended claims and figures show characterizing features of the invention in specific combinations. The skilled person will easily be able to consider further combinations or sub-combinations of these features in order to adapt the invention as defined in the claims to his specific needs.

## Claims

1. An optical scanning device (5) comprising:
a first light source portion (55a, 55c) that emits a first light beam (D1, D3);
a second light source portion (55b, 55d) that emits a second light beam (D2, D4);
a scanning optical system (51, 56a to 61a, 56b to 61b) that directs the first and second light beams (D1, D3 and D2, D4) to scan corresponding image carrying members (1a to 1d); and
a housing (50) that holds the first and second light source portions (55a, 55c and 55b, 55d) and optical components constituting the scanning optical system (51, 56a to 61a, 56b to 61b),
the optical scanning device (5) shining light to surfaces of the image carrying members (1a to 1d) to form electrostatic latent images through attenuation of electric charge,
wherein
the scanning optical system (51, 56a to 61a, 56b to 61b) includes:
a polygon mirror (51) that deflects the first and second light beams (D1, D3 and D2, D4);
one or more scanning lenses (56a, 56b, 57a, 57b) that deflect the first and second light beams (D1, D3 and D2, D4) deflected by the polygon mirror (51); and
a plurality of turn-back mirrors (58a to 61a, 58b to 61b) that direct the first and second light beams (D1, D3 and D2, D4) deflected by the scanning lenses (56a, 56b, 57a, 57b) to the surfaces of the image carrying members,
the turn-back mirrors (58a to 61a, 58b to 61b) include:
a first mirror (58a, 58b) that reflects the first and second light beams (D1, D3 and D2, D4) having passed through the scanning lenses (56a, 56b, 57a, 57b);
a second mirror (59a, 59b) that directs the first light beam (D1, D3) reflected by the first mirror (58a, 58b) to one of the image carrying members (1a, 1c); and
a third mirror (60a, 60b) and a fourth mirror (61a, 61d) that direct the second light beam (D2, D4) reflected by the first mirror (58a, 58b) to another of the image carrying members (1b, 1d), and
the second and third mirrors (59a, 59b and 60a, 60b) are disposed, as seen from a main scanning direction, closer to the polygon mirror (51) than the first mirror (58a, 58b), and the fourth mirror (61a, 61b) is disposed, as seen from the main scanning direction, farther from the polygon mirror (51) than the first mirror (58a, 58b).

2. The optical scanning device (5) according to claim 1, wherein
the first and second light beams (D1, D3 and D2, D4) are so directed as to be incident on the
first mirror (58a, 58b) with a predetermined interval therebetween in a subsidiary scanning direction orthogonal to the main scanning direction, and
a width of the first mirror (58a, 58b) along the subsidiary scanning direction is 1.5 times or more a width of the second, third, and fourth mirrors (59a, 59b, 60a, 60b, and 61a, 61b).

3. The optical scanning device (5) according to claim 1, wherein
the scanning lenses (56a, 56b, 57a, 57b) include a first scanning lens (56a, 56b) disposed closer to the polygon mirror (51) and a second scanning lens (57a, 57b) disposed farther from the polygon mirror (51) as seen from the main scanning direction, and,
as seen from the main scanning direction, starting with one closest to the polygon mirror (51), the first scanning lens (56a, 56b), the second mirror (59a, 59b), the second scanning lens (57a, 57b), the third mirror (60a, 60b), the first mirror (58a, 58b), and the fourth mirror (61a, 61b) are disposed in this order.

4. The optical scanning device (5) according to claim 1, wherein
the optical scanning device (5) includes a pair of the first light source portions (55a, 55c) and a pair of the second light source portions (55b, 55d),
a pair of the scanning lenses (56a, 56b, 57a, 57b) and a pair of the turn-back mirrors (58a to 61a, 58b to 61b) are disposed each pair in left-to-right symmetry across the polygon mirror (51) as seen from the main scanning direction, and
the first and second light beams (D1, D3 and D2, D4) are directed to the surfaces of four different ones of the image carrying members (1a to 1d).

5. An image forming apparatus (100) comprising:
the optical scanning device (5) according to claim 1.
